# EUROPEAN PATENT APPLICATION

(11) **EP 0 750 198 A1**
(43) Date of publication of application: **27.12.1996**
(21) Application number: 96660028.0
(22) Date of filing: 12.06.1996
(51) Int. Cl.: G01P 13/02

(54) **Wind vane/anemometer equipped with a Gray coder and a Gray coder structure**

(30) Priority: 20.06.1995 FI 953054
(71) Applicant: VAISALA OY, FI-00421 Helsinki (FI)
(72) Inventor: Inha, Kai, 04430 Järvenpäa (FI)
(74) Representative: Lipsanen, Jari Seppo Einari

(57) **Abstract**

The present invention relates to a wind vane/anemometer and a Gray coder structure (3). The wind vane/anemometer comprises a body (2), a wind direction sensing means (3) rotatably adapted to said body (2), and a Gray coder (5) of revolved cross section serving to indicate the angular position of said wind direction sensing means (3). According to the invention, the Gray coder (5) is such a piece of revolved section in which the inner surface of the coder structure is provided with a reflective pattern of Gray code tracks (9, 10).

## Description

The present invention relates to a wind vane/anemometer equipped with a Gray coder and a Gray coder structure used therein.

Conventionally, a disc-like Gray coder has been used in a wind vane for indicating wind direction. Such a technique is based on a coding disc with sectored tracks formed thereon. The disc is illuminated from one side and the light transmitted through the transparent segments of the disc tracks is detected on the other side by photosensitive detectors. The tracks are patterned so that the binary code obtained from the coder changes by one bit only at a time when the wind vane rotates from one angular position into another.

Such a prior-art coder structure requires a broadened bulge in the direction transducer at the point housing the coding disc. Due to tolerancing problems and higher manufacturing costs, it is difficult to make the disc diameter smaller. Furthermore, a disc-like structure is handicapped by impaired precision of bit state cross-over at the inner tracks of the disc. Desiredly, signal state cross-over at the border of each code bit (that is, the edge of a transparent segment of a track) should occur with equal precision for all bits. In practice, the spacing between the disc and the light emitter cannot be made very small, because the disc may warp at its rim areas due to vibration and temperature changes. In concurrent designs, the clearances are in the order of 1 mm. Larger clearances in turn make precise encoding of wind direction impractical.

It is an object of the present invention to overcome the drawbacks of the above-described techniques and to provide an entirely novel type of wind vane/anemometer equipped with a Gray coder and a Gray coder structure used therein.

The goal of the invention is accomplished by shaping the Gray coder into an essentially cylindrical piece of revolution having its inner surface covered with reflective areas patterned to form the Gray code.

More specifically, the wind vane/anemometer according to the invention is characterized by what is stated in the characterizing part of claim 1.

The invention offers significant benefits.

The lower part of the wind vane/anemometer can be designed smaller, which gives manufacturing advantages. A wind vane/anemometer with a narrower profile causes less disturbance to the air flow, whereby the measurements will gain in accuracy. Also the lighter weight of the wind vane/anemometer construction contributes to higher measurement accuracy. The compact electronics printed circuit board of the meter can be replaced in one piece from below without dismantling the entire meter. When desired, both the light emitters and the detectors can be placed on the same PCB. This facility reduces manufacturing costs and the number of replacement parts.

Furthermore, the operating precision of the Gray coder will not be impaired toward the inner tracks as is the case in the disc-like coder structure. Hence, a 7-bit or 8-bit version can be manufactured with less effort.

By virtue of the invention, the use of coaxial bearings, gears or other reduction arrangements can be avoided in a construction having both the wind speed and direction transducers integrated into a single axial entity.

Manufacturing tolerances can be easily brought down to air gaps as small as 0.1 mm, thereby facilitating commercial implementation of a 7-bit or 8-bit coder in this kind of small structure. At the light detector elements, gap widths of the coder body in an 8-bit structure can be estimated to be approx. 0.2 mm (with a height of 2 to 3 mm). The gap clearances of the code tracks in the Gray code cylinder are approximately of the same order.

Vibrations and temperature changes have no significant effect on the operating clearances of the structure.

In the following the invention is described in greater detail with reference to embodiments of the invention illustrated in the appended diagrams in which
Figure 1 is a longitudinally sectioned side view of a wind vane/anemometer according to the invention;
Figure 2 is longitudinally sectioned side view of a Gray coder structure according to the invention;
Figure 3 is a top view of the Gray coder structure illustrated in Fig. 2;
Figure 4 is a plane development of the Gray coder structure illustrated in Fig. 2;
Figure 5 is a development of the Gray coder structure into a disc corresponding to a prior-art coder structure;
Figure 6a is a longitudinally sectioned, partially exposed side view of a wind vane/anemometer according to the invention;
Figure 6b shows the wind vane/anemometer of Fig. 6a ready assembled; and
Figure 7 is a longitudinally sectioned side view of the bearings of the wind vane/anemometer illustrated in Figs. 6a and 6b.

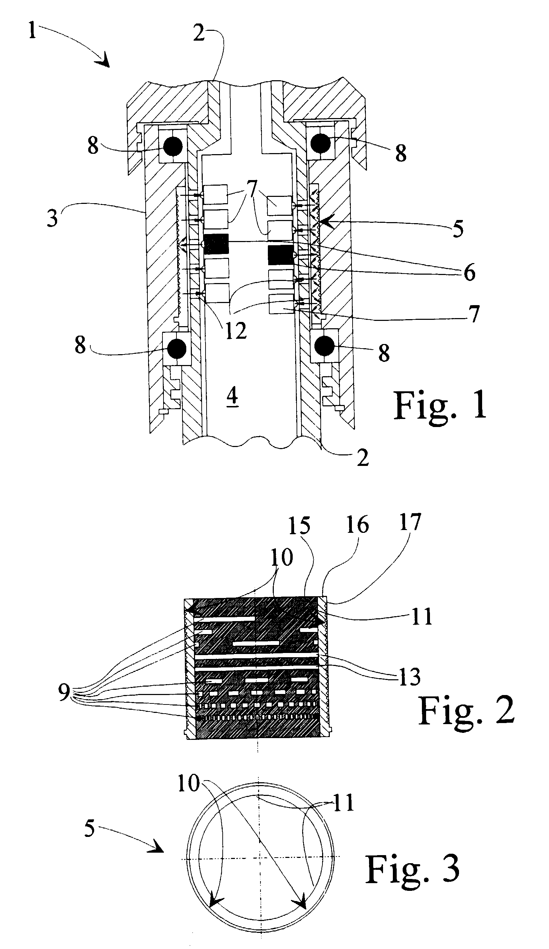

Referring to Fig. 1, the wind vane/anemometer 1 shown therein has a body section 2 typically carrying a wind speed measurement device (not shown) at its top. Such a wind speed measurement device generally comprises a crossed cup wheel, whose closer description is omitted herein. In conventional measurement systems, the wind speed signal is taken to a measurement electronics circuitry 4 without a mechanical or galvanic connection by way of e.g., optical or inductive means. The wind direction sensor, a vane (not shown), is correspondingly attached to a vane section 3, which in turn is mounted on bearings 8 of the body section 2. Obviously, the inner surface of the vane section 3 and the outer surface of the body section 2 must have a revolved cross section within the area of the vane section 3 to make the rotation of the vane section 3 possible. To the inner surface of the vane section 3 is adapted a cylindrical Gray coder 5. The body section 2 is provided with openings 12 which facilitate the cooperation of light emitters 6 with photosensitive detectors 7.

Referring to Figs. 2-4, the Gray coder 5 comprises an inner surface 15, a light-transmissive body 16 and an outer surface 17. The inner surface chiefly comprises a nonreflective surface 11 and contiguous light-transmissive annular tracks 13 located at the light emitters 6 so that the light emitted therefrom is capable of continuously illuminating a reflective surface 10 located in the vicinity of the outer surface 17 of the coder 5, whereby the reflective surface can diffuse the emitted light to the entire area of the coder body piece 16. Light diffusion can be improved by means of the prismatic coating shown in the drawing. The actual angular position is encodes by means of light-transmissive, code-forming segments 9. The light received via the transmissive track segments is employed at the detectors 7 to encode the direction information of the wind vane so that the uppermost track of transmissive segments 9 provides the most significant bit of the direction code indicating the coarse direction (e.g., north/west) and each successively adjacent annular track of segmentally transmissive pattern duplicates the resolution of the angular position code. Hence, the final resolution is determined by the number of transmissive segments in the lowermost track that in the illustrated embodiment is 64. Because the number of bits on the circumference of the annular track is double the number of openings, the wind direction can thence be resolved to an angular increment of 360°/128 = 2.8°. Obviously, the mutual order of the transmissively segmented annular tracks 9 can be arranged differently on the cylindrical surface provided that the bits of the binary angular code are decoded properly in the electronics circuitry 4. The angular resolution may be improved as desired by adding tracks with a still higher number of transmissive segments per track.

In Fig. 3 the coder 5 is shown in a top view.

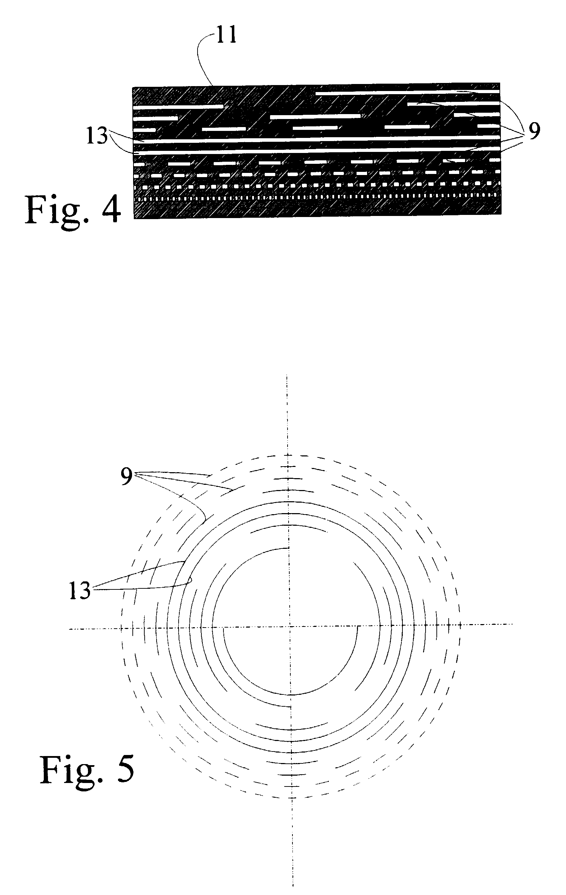

In Fig. 4 the coder 5 is shown developed into a planar surface.

In Fig. 5 both the code pattern and the tracks 13 are shown developed into a disc-like surface.

Alternatively, the straight cylindrical surface of the coder 5 can be designed into a truncated conical surface. However, a too large included angle of the cone will diminish the benefits offered by the invention as the outer dimensions of the wind vane/anemometer will become larger.

An essential characterizing property of the coder structure according to the invention is that the coder is shaped into an essentially cylindrical piece of revolution having reflective areas patterned as the Gray code thereon. Hence, the coder structure 5 according to the invention may alternatively be implemented as an essentially cylindrical surface having the Gray-coded tracks formed directly onto a nonreflective surface. Herein, an important task in the coder design is to provide uniform diffusion of emitted light onto the entire area of coder tracks.

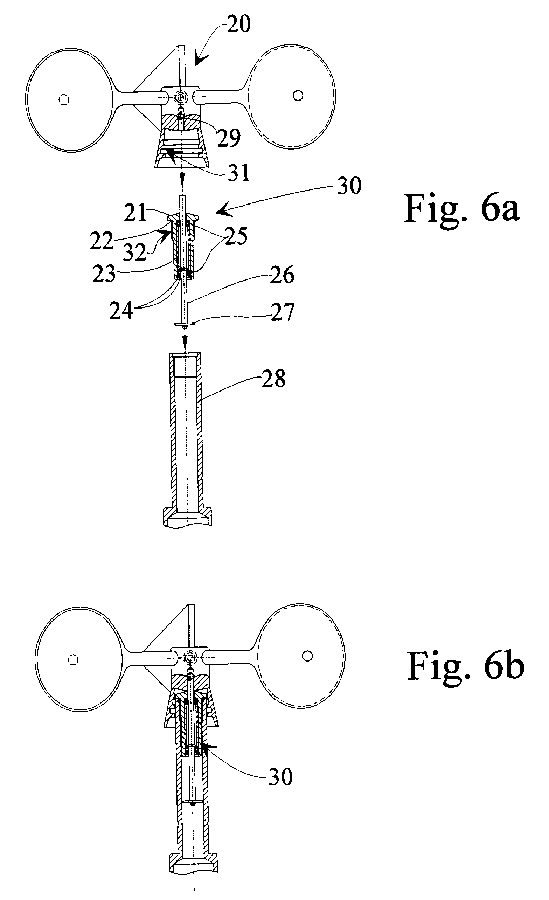

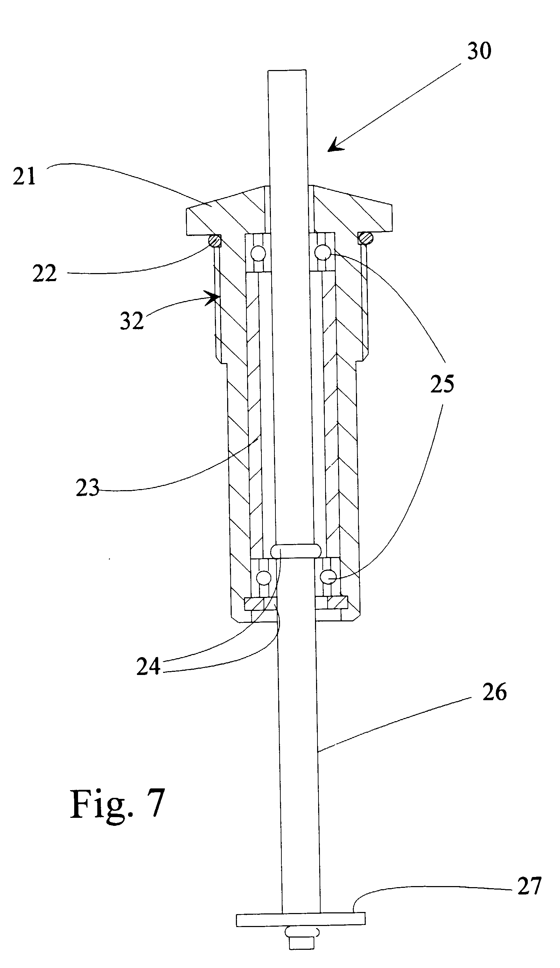

As shown in Figs. 6a, 6b and 7, the upper section of the wind vane/anemometer comprises a crossed cup wheel 20, bearings 25 and a body tube 28 serving to connect the upper section to the lower section of the wind vane/anemometer illustrated in Fig. 1. The upper surface of the bearing bushing 21 is slanted to deflect rain drops outwardly thus preventing wetting of the bearings 25. The seal between the body tube 28 and the bearing bushing 21 is arranged by means of an O-ring 22. The crossed cup wheel 20 is fixed to the shaft 26 by means of e.g., a hexagon-socket head screw 29 aligned orthogonally to the plane of the diagram. The seal of the crossed cup wheel is provided by a labyrinth seal structure 31 and the lower edge of the hub is taken as far as possible from the body tube 28 to prevent icicles growing to the hub edge from extending radially so far as to reach to the center tube 28. The lock rings 24 and the inner bushing 23 lock the shaft 26 stationary with respect to the bearing subassembly 30.

The bearing subassembly 30 is mounted into the wind vane/anemometer assembly simply by screwing the threaded bearing subassembly 30 at its thread 32 onto the mating thread of the body tube 28. The wind speed signal is obtained from a pulse transmitter disc 27. By virtue of the above-described arrangement, the bearing subassembly can be replaced quickly without the need for separate recalibration of the anemometer section.

## Claims

1. A wind vane/anemometer (1) comprising
- a body (2),
- a wind direction sensing means (3) rotatably adapted to said body (2), and
- a Gray coder (5) of revolved cross section serving to indicate the angular position of said wind direction sensing means (3),
**characterized** in that
- said Gray coder (5) is such a piece of revolved section in which the inner surface of the coder structure is provided with a reflective pattern of Gray code tracks (9, 10).

2. A wind vane/anemometer as defined in claim 1, **characterized** in that said Gray coder structure (5) comprises an essentially cylindrical surface of revolution.

3. A wind vane/anemometer as defined in claim 1, **characterized** in that said Gray coder structure (5) comprises a surface of revolution essentially approximating a truncated cone.

4. A wind vane/anemometer as defined in claim 1, **characterized** in that said Gray coder structure (5) is comprised of a light-transmissive body section (16), a nonreflective surface (11) formed on the inner surface (15) thereof, said surface having transmissive areas (9) formed thereon in accordance with the Gray coding scheme, and a reflective surface (10) formed to the vicinity of the outer surface (17) of the coder structure (5).

5. A wind vane/anemometer as defined in claim 4, **characterized** in that said reflective surface (10) is provided with a prismatic texture to improve the diffusion of light impinging thereon.

6. A wind vane/anemometer as defined in claim 1, **characterized** in that said wind vane/anemometer incorporates a dismountable, integrated bearing-shaft subassembly (30).

7. A Gray coder (5) with a revolved section structure, said coder comprising code means (9) for indicating the angular position of a sensing piece (3),
**characterized** in that
- said Gray coder (5) is such a piece of revolved section in which the inner surface of the coder structure is provided with a reflective pattern of Gray code tracks (9, 10).

8. A Gray coder (5) as defined in claim 7, **characterized** in that said coder structure comprises an essentially cylindrical surface of revolution.

9. A Gray coder (5) as defined in claim 7, **characterized** in that said coder structure comprises a surface of revolution essentially approximating a truncated cone.

10. A Gray coder (5) as defined in claim 7, **characterized** in that said coder structure is comprised of a light-transmissive body section (16), a nonreflective surface (11) formed on the inner surface (15) thereof said surface having transmissive areas (9) formed thereon in accordance with the Gray coding scheme, and a reflective surface (10) formed to the vicinity of the outer surface (17) of the coder structure (5).

11. A Gray coder (5) as defined in claim 10, **characterized** in that said reflective surface (10) is provided with a prismatic texture to improve the diffusion of light impinging thereon.
